## Europäisches Patentamt

## European Patent Office

## Office européen des brevets

(19)

(11) Veröffentlichungsnummer: **0 601 061 B1**

(12) # EUROPÄISCHE PATENTSCHRIFT

(45) Veröffentlichungstag der Patentschrift: **10.05.95**

(51) Int. Cl.⁶: **B64G 1/36**, G05D 1/08

(21) Anmeldenummer: **92918950.4**

(22) Anmeldetag: **04.09.92**

(86) Internationale Anmeldenummer:
**PCT/EP92/02047**

(87) Internationale Veröffentlichungsnummer:
**WO 93/04922 (18.03.93 93/08)**

(54) DREIACHSENSTABILISIERTER, ERDORIENTIERTER SATELLIT UND ZUGEHÖRIGES SONNEN- UND ERDAKOUISITIONSVERFAHREN.

(30) Priorität: **06.09.91 DE 4129630**

(43) Veröffentlichungstag der Anmeldung:
**15.06.94 Patentblatt 94/24**

(45) Bekanntmachung des Hinweises auf die Patenterteilung:
**10.05.95 Patentblatt 95/19**

(84) Benannte Vertragsstaaten:
**DE FR GB IT**

(56) Entgegenhaltungen:
**EP-A- 0 209 429
FR-A- 2 649 809
GB-A- 2 008 284**

(73) Patentinhaber: **Daimler-Benz Aerospace Aktiengesellschaft**

**D-81663 München (DE)**

(72) Erfinder: **SURAUER, Michael**
**Lindenstrasse 11**
**D-8224 Chieming (DE)**
Erfinder: **BITTNER, Helmut**
**Zirlerstrasse 4**
**D-8000 München 70 (DE)**
Erfinder: **FICHTER, Walter**
**Kästlenstrasse 20**
**D-8000 München 82 (DE)**
Erfinder: **FISCHER, Horst-Dieter**
**Grünauer Allee 14**
**D-8025 Unterhaching (DE)**

**Beschreibung**

Die Erfindung bezieht sich auf einen dreiachsenstabilisierten, erdorientierten Satelliten gemäß dem Oberbegriff des Patentanspruchs 1 sowie auf ein Verfahren zur Durchführung der Sonnen- und Erdakquisition bei einem solchen Satelliten.

Ein derartiger Satellit ist aus H. Bittner et al. "The Attitude Determination and Control Subsystem of the Intelsat V Spacecraft", veröffentlicht in Proceedings of AOCS Conference, Noordwijk 3.-6. Oktober 1977, ESA SP-128, November 1977, bekannt. Er vermag mit Hilfe seines Lageregelungssystems die unterschiedlichsten Manöver durchzuführen, die in der Transferbahn und der geostationären Bahn erforderlich sind, wie z.B. die Sonnenakquisition, d.h. die Ausrichtung der X-Achse seines satellitenfesten Koordinatensystems (X, Y, Z) auf die Sonne, die Erdakquisition, d.h. die Ausrichtung der Z-Achse auf den Erdmittelpunkt, das Apogäumsmanöver, d.h. die Ausrichtung der Z-Achse in Richtung der geostationären Bahn im Apogäum der Transferbahn vor dem Apogäumseinschuß, und schließlich alle einfachen Lageregelungsmanöver zur ständigen Einhaltung der Sollorientierung sowie sämtliche Reakquisitionsmanöver bei Verlust der Lagereferenzen wie Sonne und/oder Erde.

Das Lageregelungssystem dieses bekannten Satelliten enthält einen Regler zur Anwendung der jeweils geforderten Regelgesetze, Stellglieder, nämlich Lageregelungsdüsen, zur Erzeugung von Stellmomenten um jede der drei Satelliten-Hauptachsen (X, Y, Z) nach Maßgabe der vom Regler abgegebenen Stellsignale, sowie Sonnensensoren, einen Erdsensor und ein redundant ausgelegtes, dreiachsig messendes Kreiselpaket zur direkten Messung der Komponenten des Satelliten-Drehgeschwindigkeitsvektors bezüglich der Satelliten-Hauptachsen. Die Sonnensensoren haben ein erstes Gesichtsfeld, welches um die negative Z-Achse herum insgesamt die eine Hälfte der XZ-Ebene und eine gewisse Breite senkrecht dazu umfaßt, und ein zweites Gesichtsfeld, das um die X-Achse herum insgesamt ein Drittel der XY-Ebene und eine gewisse Breite senkrecht dazu umfaßt. Der Erdsensor ist mit seiner optischen Achse wie üblich in Richtung der Z-Achse orientiert, die in der geostationären Bahn ständig auf den Erdmittelpunkt auszurichten ist (Erdorientierung).

Zu den im Lageregelungssystem verwendeten Meßwertgebern gehört als wesentliches Element ein dreiachsig messendes Kreiselpaket zur direkten messenden Verfolgung der auf das satellitenfeste Koordinatensystem bezogenen Komponenten des Satelliten-Drehgeschwindigkeitsvektors $\underline{\omega} = (\omega_X, \omega_Y, \omega_Z)^T$. Diese Meßwerte werden bei dem bekannten Satelliten benötigt, weil die Regelung dort entsprechend ausgelegt ist, um die gewünschten Lageregelungsmanöver durchführen zu können. Die Verwendung derartiger Kreisel hat jedoch den gravierenden Nachteil, daß es sich dabei um elektromechanische Komponenten handelt, an die insbesondere unter den extremen Bedingungen des Weltraums sehr hohe Anforderungen zu stellen sind, und die sehr stör- und verschleißanfällig sind. Die dadurch erforderliche redundante Auslegung stellt einen erheblichen Kostenfaktor dar.

Der Erfindung liegt daher die Aufgabe zugrunde, einen Satelliten der eingangs genannten Art bereitzustellen, dessen Lageregelungssystem möglichst kostengünstig, dabei aber funktionssicher gestaltet ist.

Diese Aufgabe ist gemäß der Erfindung durch die im kennzeichnenden Teil des Patentanspruchs 1 enthaltenen Merkmale gelöst.

Demnach wird nunmehr eine Sonnensensoranordnung verwendet, deren Gesichtsfeld in einer Ebene des satellitenfesten Koordinatensystems, der hier sogenannten "Gesichtsfeldebene", beispielsweise der XZ-Ebene, den vollen Winkel von $0 \leqq \alpha_1 \leqq 2\pi$ umfaßt, wobei $\alpha_1$ ein in dieser Ebene von einer willkürlich gewählten Bezugsrichtung, etwa der X-Achse, aus umlaufender Winkel ist. Es ist also in der Gesichtsfeldebene eine Rundumsicht gefordert. Senkrecht dazu, also z.B. in Richtung der Y-Achse, muß natürlich eine Mindestbreite des Gesichtsfeldes gegeben sein, damit eine zweiachsige Messung möglich wird.

Als wesentliches Merkmal ist gefordert, daß als Meßwertgeber für das Lageregelungssystem ausschließlich die Sonnensensoranordnung und der Erdsensor vorhanden sind, also keine Kreisel mehr benötigt werden. Hierzu sind im Regler besondere Regelgesetze anzuwenden, die keine direkten Meßwerte für die Komponenten des Satelliten-Drehgeschwindigkeitsvektors $\underline{\omega}$ benötigen, und die zur Bereitstellung der Stellsignale ausschließlich von den Meßsignalen Gebrauch machen, welche mit Hilfe der noch vorhandenen Meßwertgeber (Sonnensensoren und Erdsensor) gewinnbar sind. Sämtliche Lageregelungsmanöver sind hinsichtlich der anzuwendenden Regelgesetze und der darin benötigten Meßgrößen entsprechend zu gestalten.

In den Unteransprüchen sind Verfahren zur Durchführung der Sonnen- und Erdakquisition angegeben, die den oben gestellen Anforderungen genügen und bei einem Satelliten gemäß der Erfindung, der über keine Kreisel verfügt, zur Anwendung kommen können.

Die Sonnenakquisition ist ein Manöver, mit dem bekanntlich beabsichtigt ist, eine der Satelliten-Hauptachsen, z.B. die X-Achse, auf die Sonne auszurichten. Dann können die in Richtung der Y-Achse ausfahrbaren und um diese drehbaren Solargeneratoren zumindest teilentfaltet und der Sonne zugekehrt werden, um so die Energieversorgung, beispielsweise in der Transferbahn, bereits in einem gewissen Mindestumfang sicherzustellen. Das Manöver der Erdakquisition bezweckt, eine andere der drei Satelliten-Hauptachsen, z.B. die Z-Achse, auf den Erdmittelpunkt zu richten, da die der Kommunikation mit der oder den Erdstationen dienenden Antennen auf dem Satelliten in diese Richtung orientiert sind. Dieses Manöver ist im allgemeinen bereits auf der Transferbahn durchzuführen, aber auch auf der endgültigen geostationären Bahn nach Durchführung des Apogäumsmanövers.

Die Sonnen- und Erdakquisition ist gemäß der Erfindung folgendermaßen durchzuführen, wobei von einem beliebigen, ggf. taumelnden Zustand des Satelliten ausgegangen wird:

Zunächst erfolgt, falls die Sonne sich nicht bereits im Gesichtsfeld der Sonnensensoren befindet, die Sonnensuche. Dabei wird es häufig vorkommen, daß die Sonne von alleine in das Gesichtsfeld eintritt, das senkrecht zur Gesichtsfeldebene, z.B. der XZ-Ebene, eine Breite von $\pm\alpha_2$ mit $\alpha_2 < 90°$, beispielsweise $\alpha_2 = 60°$, haben möge. Dies kann dadurch begründet sein, daß der Satellit sich bereits um eine Drehachse dreht, die innerhalb des Gesichtsfeldes verläuft, so daß dann wegen der Rundumsicht die Sonne spätestens nach einer halben derartigen Drehung in das Gesichtsfeld der Sonnensensoren gelangt. Dieser Fall ist um so eher gegeben, je größer der Winkel $\alpha_2$ ist. Andererseits kann auch der Fall eintreten, daß eine vorliegende Taumelbewegung infolge Energiedissipation durch Treibstoff- und Strukturdämpfung in einer Drehung um die einzige stabile Achse, nämlich die des größten Trägheitsmomentes, endet. Diese Achse liegt bei Erdsatelliten im allgemeinen in der XZ-Ebene, welche als Gesichtsfeldebene bevorzugt ist.

Sollte die Sonne nach einer vorwählbaren Zeit nicht in das Gesichtsfeld der Sonnensensoranordnung eingetreten sein, so können zur Anregung einer Nutationsbewegung Momentenpulse um eine in der Gesichtsfeldebene (z.B. XZ-Ebene) liegende Achse, ggf. wiederholt und mit jeweils erhöhtem Momentenniveau, ausgeübt werden. Diese Nutationsbewegung führt dann mit Sicherheit dazu, daß die Sonne schließlich ins Gesichtsfeld der Sonnensensoren gelangt.

Sodann ist die Sonnenlinie, welche durch die Richtung des Sonnenvektors $\underline{S} = (S_X, S_Y, S_Z)^T$ gegeben ist, auf eine erste Referenzrichtung einzuregeln (Sonnen-Referenzvektor $\underline{S}_{R1}$), vorzugsweise auf eine in der Gesichtsfeldebene liegende Hauptachse (z.B. die X-Achse). Um zu gewährleisten, daß bei der später erfolgenden Erdsuche (Erdakquisition) die optische Achse des Erdsensors nicht infolge zu schneller Rotation um eine senkrecht zu dieser optischen Achse gerichtete Drehachse zu schnell über die Erde hinwegstreicht, um ein rechtzeitiges Abbremsen zu ermöglichen, und um andererseits zu verhindern, daß diese bei der Erdsuche erforderliche Drehung viel zu langsam erfolgt, wird die Satelliten-Drehgeschwindigkeit $\underline{\omega}_p$ um die Sonnenlinie im nächsten Schritt auf einen vorwählbaren, konstanten Wert eingeregelt, wobei gleichzeitig die Querkomponente $\underline{\omega}_q$ der Satelliten-Drehgeschwindigkeit so weitgehend wie möglich gedämpft bzw. vollständig unterdrückt wird. Schließlich ist die Sonnenlinie auf eine zweite Referenzrichtung (Sonnen-Referenzvektor $\underline{S}_{R2}$) einzuregeln, die in Abhängigkeit von der jeweiligen bekannten Bahnposition des Satelliten und der Richtung der optischen Achse des Erdsensors so gewählt ist, daß bei Drehung des Satelliten um diese zweite Referenzrichtung die optische Achse des Erdsensors die Erde überstreicht. Da die hierzu erforderliche Satelliten-Drehgeschwindigkeit um die Sonnenlinie bereits vorher auf einen mittleren Wert eingeregelt und danach konstant gehalten wurde, kann die optische Achse des Erdsensors beim erstmaligen Erdeinfang auf den Erdmittelpunkt ausgerichtet werden.

Bei der Sonnensuche mittels Anregung einer Nutationsbewegung kann von folgenden Gegebenheiten ausgegangen werden: Die Gesichtsfeldebene möge die XZ-Ebene sein, das Gesichtsfeld der Sonnensensoranordnung senkrecht dazu möge einen Winkelbereich zwischen $\pm\alpha_2$ mit $\alpha_2 < 90°$, z.B. $\alpha_2 = 60°$, umfassen und der Satellit möge um die senkrecht auf der XZ-Ebene stehende Y-Achse mit der Winkelgeschwindigkeit $\omega$ rotieren und den mit dem Winkelgeschwindigkeitsvektor $\underline{\omega}$ gleichgerichteten Drehimpulsvektor $\underline{L}$ aufweisen. Dies ist die schlechtestmögliche Konfiguration vor der Einleitung der Nutationsbewegung. Diese kann dadurch angeregt werden, daß ein Momentenpuls der Pulsdauer

$$\Delta t = \tan(\pi - \alpha_2) \cdot \frac{L}{t_c},$$

$L = I_Y \omega$

um die X-Achse erzeugt wird, mit dem Momentenniveau $t_c$ sowie dem Trägheitsmoment $I_Y$ des Satelliten bzgl. der Y-Achse. Nach einer Wartezeit von

3

$$\Delta t_1 = \frac{2\pi I_T}{L} \cos(\pi - \alpha_2), \quad I_T \equiv \max(I_X, I_Z)$$

kann ein neuer Momentenpuls, ggf. mit erhöhter Pulsdauer, ausgeübt werden, falls die Sonnensuche noch nicht zum Erfolg geführt hat.

Bei der Einregelung der Sonnenlinie, d.h. der durch den Sonnenvektor $\underline{S}$ gegebenen Richtung, auf eine erste Referenzrichtung (Sonnen-Referenzvektor $\underline{S}_{R1}$) ist folgendes Regelgesetz anzuwenden:

$$\underline{u} = -\underline{K}_D \underline{L}_D \underline{\omega}_q + \underline{K}_P \underline{L}_P (\tilde{\underline{S}}_{R1} \cdot \underline{S})$$

$$\underline{\omega}_q = -\tilde{\underline{S}} \cdot \hat{\underline{S}}$$

Hierbei bedeuten $\underline{u}$ den Vektor der den drei Achsenrichtungen zugeordneten, den Stellgliedern zuzuführenden Stellsignale, $\underline{K}_D$ sowie $\underline{K}_P$ Verstärkungs-Diagonalmatrizen, $\underline{L}_D$ und $\underline{L}_P$ vektorielle Begrenzer, welche die Länge des nachfolgenden Vektors begrenzen, ohne dessen Richtung zu ändern (dies ist erforderlich, um die Stabilität der Regelung sicherzustellen), $\tilde{\underline{S}}_{R1}$ die schiefsymmetrische, aus den Komponenten des Sonnen-Referenzvektors $\underline{S}_{R1}$ abzuleitende Vektorprodukt-Matrix, welche das Vektorprodukt $\underline{S}_{R1} \times \underline{S}$ vermittelt, und $\hat{\underline{S}}$ die zeitliche Ableitung des Sonnenvektors $\underline{S}$. Der Sonnenvektor $\underline{S}$ ist bekanntlich ein Einheitsvektor, so daß bei zweiachsiger Messung durch die Sonnensensoren sich aus den zwei gemessenen Komponenten die dritte automatisch ergibt. Die zeitliche Ableitung $\hat{\underline{S}}$ wird aus dem gemessenen Sonnenvektor $\underline{S}$ durch numerische Differentiation oder über einen Hochpaß, vorzugsweise zweiter Ordnung gewonnen, etwa gemäß einer Übertragungsfunktion (s ist der Laplace-Operator) des Typs:

$$\hat{\underline{S}} = \frac{(T_1 + T_2)s^2 + s}{(1 + T_1 s)(1 + T_2 s)} \cdot \underline{S}$$

Das obige Regelgesetz ermöglicht die Einregelung des Sonnenvektors $\underline{S}$ auf den Sonnen-Referenzvektor $\underline{S}_{R1}$, wobei die Geschwindigkeit, mit der die Sonnenlinie in die Referenzrichtung gefahren wird, limitiert ist. Es wirkt dämpfend, solange $\underline{\omega}_q$ nicht gleich 0 ist. Es regelt nicht die Drehgeschwindigkeit um die Sonnenlinie, vielmehr bleibt diese (zumindest annähernd) konstant.

Das Einregeln der Satelliten-Drehgeschwindigkeit $\omega_p$ um die Sonnenlinie auf einen vorwählbaren konstanten Wert geschieht nach folgendem Regelgesetz:

$$\underline{u} = -\underline{K}_D \underline{L}_D \underline{\omega}_q + \underline{K}_P \underline{L}_P (\tilde{\underline{S}}_{R1} \cdot \underline{S}) + k_S \text{sign}(c)\underline{S}(|c_R| - |c|)$$

wobei abgesehen von den bereits erwähnten Größen $k_s$ einen skalaren Verstärkungsfakor, c die Höhe der Satelliten-Drehgeschwindigkeit um die Sonnenlinie und $c_R$ den dafür vorwählbaren Referenzwert bedeuten. In diesem Regelgesetz regeln die beiden ersten Terme nach wie vor die Sonnenlinie, wie oben beschrieben, während der dritte Term nunmehr für die Regelung der Satelliten-Drehgeschwindigkeit um die Sonnenlinie auf den Referenzwert $c_R$ zuständig ist. Dabei müssen das Vorzeichen sign(c) und c geschätzt werden. Der dritte Term wird nur hinzugeschaltet, wenn gültige Schätzwerte für c vorliegen.

Die Schätzung der Drehgeschwindigkeit c kann folgendermaßen vorgenommen werden:
Als Grundvoraussetzung gilt, daß die Drehung des Satelliten um die Sonnenlinie in die Achsen senkrecht dazu einkoppeln muß, denn nur senkrecht zur Sonnenlinie sind Geschwindigkeiten meßbar bzw. schätzbar. Dies ist automatisch sichergestellt, wenn die Trägheitsmomente um die drei Satellitenachsen nicht alle gleich sind. Dann folgt nämlich aus der grundlegenden Gleichung

$$\underline{I}\dot{\underline{\omega}} + \tilde{\underline{\omega}}\underline{I}\underline{\omega} = \underline{\tau}$$

mit dem Trägheitssensor I, der schiefsymmetrischen Vektorprodukt-Matrix $\tilde{\omega}$
und dem wirkenden Momentenvektor $\underline{\tau}$ das verkoppelte Gleichungssystem

$$I_X\dot{\omega}_X + (I_Z-I_Y)\omega_Y\omega_Z = \tau_X$$
$$I_Y\dot{\omega}_Y + (I_X-I_Z)\omega_X\omega_Z = \tau_Y$$
$$I_Z\dot{\omega}_Z + (I_Y-I_X)\omega_X\omega_Y = \tau_Z$$

Falls alle Trägkeitsmomente einander gleich sind, so kann der oben erwähnte Fall erzwungen werden, indem mittels eines Drallrades im Satelliten eine Drehimpulskomponente quer zur Sonnenlinie künstlich erzeugt wird gemäß

$$I\dot{\underline{\omega}} + \tilde{\underline{\omega}}(I\underline{\omega} + \underline{h}) = \underline{\tau}$$

Im erstgenannten Fall ergeben sich besonders einfache Schätzalgorithmen, wenn quasi stationäre Verhältnisse herrschen, d.h. wenn gilt: $\underline{S} \approx \underline{S}_{R1}$ und $\hat{\underline{S}} \approx o$. Dann erhält man

$$c^2 = \frac{\left(\hat{\underline{S}} \cdot I\underline{S}\right)^T \underline{\tau}}{\left|\hat{\underline{S}} \cdot I\underline{S}\right|^2},$$

$\underline{\tau}$ ist der für die Einhaltung der Bedingung $\underline{S} \approx \underline{S}_{R1}$ und $\hat{\underline{S}} \approx o$ durch die Regelung aufzubringende Stellmomentenvektor. Er wird mit Hilfe der Aussteuerungsgrade $a_i$ der einzelnen Stellglieder, speziell der Lageregelungsdüsen, ermittelt gemäß

$$\underline{\tau} = T_c \underline{a}$$

wobei $T_c$ die Drehmomentmatrix des jeweils verwendeten Stellglied- bzw. Düsensatzes darstellt.

Die Vorzeichenermittlung (positiv oder negativ bezüglich der Richtung von $\underline{S}$) erfolgt schrittweise in aufeinanderfolgenden Zeitintervallen (k, K + 1, ...). Es ist

$$\text{sign}(c)_{k+1} = \text{sign}(|c|_{k+1} - |c|_k) \cdot \text{sign}(\tau_s)_k.$$

Dies kann wie folgt interpretiert werden: War im vergangenen Zeitintervall (k) das um die Sonnenlinie ausgeübte Drehmoment $\tau_s$ positiv, d.h. mit $\underline{S}$ gleichgerichtet, und damit $\text{sign}(\tau_s)_k = +1$, und hat sich der Betrag der Drehgeschwindigkeit um diese Achse vergrößert, so ist im gegenwärtigen Zeitinvervall (k + 1) die Drehgeschwindigkeit positiv, d.h. $\text{sign}(c)_{k+1} = +1$, usw. Als Anfangswerte können gesetzt werden (k = 0): $\text{sign}(c_k) = +1$ oder -1 und $|c|_k = 0$.

Das Vorzeichen des ausgeübten Drehmomentes um die Sonnenlinie ist:

$$\text{sign}(\tau_s) = \text{sign}(c_k) \cdot \text{sign}(|c_R| - |c|_k)$$

Die Berechnung von sign(c) wird nur ausgeführt, wenn

$$\Delta(c) \equiv |c|_{k+1} - |c|_k$$

eine gewisse Schwelle $\Delta o$ überschreitet, um Schätzungenauigkeiten von $|c|$ zu eliminieren.

Übrigens können stationäre Verhältnisse einfach abgefragt werden durch Prüfung der Beziehung

$$|\hat{S}_i| < \epsilon \ (i = X, Y, Z),$$

wobei $\epsilon$ eine kleine vorgegebene Schranke darstellt

Im zweiten der oben genannten Fälle ist die Drehgeschwindigkeit um die Sonnenlinie (nach Größe und Vorzeichen) unter Verwendung des bekannten, künstlich erzeugten Drehimpulses $\underline{h}$ und der Annahme gleicher Trägheitsmomente um die drei Satellitenachsen bestimmbar nach der einfachen Beziehung:

$$c = \frac{(\underline{\bar{S}} \cdot \underline{h})\underline{\tau}}{|\underline{\bar{S}} \cdot \underline{h}|^2}$$

Alternativ kann die Ermittlung der Satelliten-Drehgeschwindigkeit auch folgendermaßen vorgenommen werden:

Die Betätigung der um die X-Achse Momente erzeugenden Stellglieder wird unterbunden (z.B. $u_X = 0$ gesetzt). Die Querachsenbewegungen (Y, Z-Achse) werden über die meßbaren Komponenten des Sonnen-vektors ($S_Z$, $S_Y$) und deren zeitliche Ableitungen ($S_Z$, $S_Y$) geregelt gemäß der Vorschrift:

$$u_Y = -k_{DZ}\hat{\dot{S}}_Z - k_{PZ}(S_Z - S_{RZ})$$

$$-u_Z = -k_{DY}\hat{\dot{S}}_Y - k_{PY}(S_Y - S_{RY})$$

Die Sonnen-Einfallsrichtung in Satellitenachsen, die zunächst mit der Satelliten-X-Achse zusammenfällt ($\underline{S}_R$ = (1, 0, 0)), wird verschoben, vorzugsweise mit vorgegebener, konstanter Geschwindigkeit, und zwar: entweder in Richtung der Y-Achse vom Anfangswert "0" zu einem vorgegebenen Endwert ($S_{RYE}$) gemäß der Vorschrift:

$$0 \leq S_{RY}(t) = \Delta S_{RY} \cdot t \leq S_{RYE}$$

in welchem Fall der Betrag der Satelliten-Drehgeschwindigkeit c um die X-Achse bestimmbar ist nach der Beziehung:

$$c = \sqrt{\frac{k_{PY}}{A} \cdot \frac{(S_{RY} - S_{Y\infty})}{S_{Y\infty}}}$$

oder in Richtung der Satelliten-Z-Achse vom Anfangswert "0" bis zu einem vorgegebenen Endwert ($S_{RZE}$), gemäß der Vorschrift:

$$0 \leq S_{RZ}(t) = \Delta S_{RZ} \cdot t \leq S_{RZE}$$

in welchem Fall der Betrag der Satelliten-Drehgeschwindigkeit c bestimmbar ist nach der Beziehung:

$$c = \sqrt{\frac{k_{PZ}}{B} \cdot \frac{(S_{RZ} - S_{Z\infty})}{S_{Z\infty}}}$$

wobei - neben den bereits verwendeten Bezeichnungen - die entsprechenden Größen wie folgt definiert sind:

$$B = \frac{I_X - I_Z}{I_Y}$$

$$A = \frac{I_X - I_Y}{I_Z}$$

und:

$S_{Y\infty}$, $S_{Z\infty}$       - die (Y,Z) Komponenten des Sonnen-Einheitsvektors im stationären (d.h. eingeschwungenen) Zustand

$I_X$, $I_Y$, $I_Z$       - die Trägheitsmomente des Satelliten um die entsprechenden Achsen bedeuten.

Die Drehrichtung (Vorzeichen von c) läßt sich ermitteln aus den Vorzeichen (sign) der vorgegebenen ($S_{RY}$, $S_{RZ}$) bzw. meßbaren Größen ($S_{RY\infty}$, $S_{RZ\infty}$) nach den Beziehungen:

$$\mathrm{sign}(c) = \mathrm{sign}[(1-B) \cdot S_{RY}] \cdot \mathrm{sign}(S_{Z\infty})$$

im erstgenannten Fall, beziehungsweise im zweiten Fall gemäß:

$$\mathrm{sign}(c) = \mathrm{sign}[(1-A) \cdot S_{RZ}] \cdot \mathrm{sign}(S_{Y\infty})$$

In der praktischen Anwendung läßt sich das Vorzeichen der Drehgeschwindigkeit (c) auch einfach durch "probieren" ermitteln, indem ein Momenten-Inkrement um die X-Achse kommandiert wird und anschließend der numerische Wert des Betrages der Drehgeschwindigkeit ($|c|$) mit dem Wert vor der Drehimpulsänderung verglichen wird. Ist bei positivem Inkrement der Betrag größer geworden, so ist das Vorzeichen positiv und umgekehrt.

Bei der Sonnenakquisition wird beim ersten Einregeln der Sonnenlinie auf eine erste Referenzrichtung als Sonnen-Referenzvektor

$\underline{S}_{R1} = (S_{R1X}, S_{R1Y}, S_{R1Z})^T$ für den gemessenen Sonnenvektor
$\underline{S} = (S_X, S_Y, S_Z)^T$ (mit $|\underline{S}_{R1}| = 1$ und $|\underline{S}| = 1$)

zweckmäßig zunächst vorgegeben:

$$\underline{S}_{R1} = (S_X, 0, S_Z)^T$$

solange $|S_Y| \geq C_{SY}$, und

$$\underline{S}_{R1} = (1, 0, 0)^T$$

sobald $|S_Y| < C_{SY}$, wobei $C_{SY}$ eine vorwählbare Konstante ist. Hierdurch wird erreicht, daß der Sonnenvektor zuerst möglichst rasch in Richtung der XZ-Ebene geführt wird ($S_{R1Y} = 0$, während $S_{R1X} = S_X$ und $S_{R1Z} = S_Z$ unverändert bleiben), um zu verhindern, daß die Sonne wieder aus dem Gesichtsfeld verschwindet. Erst danach wird er in der XZ-Ebene zur X-Achse hin geschwenkt ($S_{R1Y} = S_{R1Z} = 0$).

Nach dem Einregeln der Drehgeschwindigkeit um die Sonnenlinie muß letztere, abhängig von der Position des Satelliten auf seiner Bahn bzw. der Konstellation Erde - Satellit - Sonne, in eine solche Richtung ($\underline{S}_{R2}$) geschwenkt werden, und zwar unter Beibehaltung der gewünschten Drehung, daß diese Drehung schließlich die optische Achse des Erdsensors über die Erde führt. Dies geschieht unter Anwendung des obigen Regelgesetzes für das Einregeln von $\underline{\omega}_p$, wobei der Sonnen-Referenzvektor $\underline{S}_{R1}$ durch den neuen, zweiten Sonnen-Referenzvektor $\underline{S}_{R2}$ zu ersetzen ist, welcher der eben erwähnten Bedingung genügt.

Aus den vorangehenden Ausführungen wird deutlich, daß ein dreiachsenstabilisierter Satellit bei der Sonnen- und Erdakquisition ohne Kreisel auskommt, daß für die geregelte Durchführung dieser Manöver in der geschilderten Weise vielmehr die Informationen der Sonnensensoren und des Erdsensors ausreichen.

Dies gilt auch für das Apogäumsmanöver, bei dem der Satellit am erdfernsten Punkt (Apogäum) seiner elliptischen Transferbahn in die endgültige, nahezu kreisförmige geostationäre Bahn eingeschossen wird, und zwar durch den in die neue Bahnrichtung wirkenden Schub des Apogäumsmotors. Geht dieser Schub in Richtung der -X-Achse, ist die Gesichtsfeldebene der zweiachsigen Sonnensensoranordnung die XZ-Ebene und ist die optische Achse des zweiachsigen Erdsensors in Richtung der Z-Achse orientiert, so ist das Apogäumsmanöver, bei dem die X-Achse in Bahnrichtung zeigen muß, ohne Kreisel ausführbar, da in dieser Konstellation eine Dreiachsenreferenz gegeben ist.

Wirkt der Schub des Apogäumsmotors hingegen in die Richtung der -Z-Achse, bei sonst gleichbleibender Sensorkonstellation, so ist die Dreiachsenreferenz zunächst verloren, da der zweiachsig messende, in Richtung der Z-Achse blickende Erdsensor dann die Erde nicht mehr im Blick hat. In diesem Falle kann auch dann auf Kreisel verzichtet werden, wenn ein zusätzlicher, in Richtung der Y-Achse orientierter Erdsensor vorhanden ist, der nur einachsig zu messen braucht.

7

In der Sollorientierung auf der geostationären Bahn benötigt der Satellit sowieso keine Kreisel, da er mit dem Erdsensor immer zur Erde orientiert ist und die Sonnensensoren bei genügendem Öffnungswinkel ihres Gesichtsfeldes in Y-Richtung die Sonne stets im Blick haben. Bei Verlust der Sollorientierung ist diese mit Hilfe der oben geschilderten Sonnen- und Erdakquisitionsverfahren ohne Kreisel wiederherstellbar.

**Patentansprüche**

1. Dreiachsenstabilisierter erdorientierter Satellit mit einem Lageregelungssystem, welches einen Regler, Stellglieder zur Erzeugung von Regelmomenten um jede der drei Achsen des satellitenfesten Koordinatensystems, einen zweiachsig messenden Erdsensor und eine zweiachsig messende Sonnensensoranordnung enthält, **dadurch gekennzeichnet**, daß das Gesichtsfeld der Sonnensensoranordnung in einer Ebene des Koordinatensystems einen Winkel bereich von 0° bis 360° umfaßt und das Lageregelungssystem als Meßwertgeber ausschließlich die Sonnensensoranordnung und den Erdsensor aufweist.

2. Verfahren zur Durchführung der Sonnen- und Erdakquisition bei einem Satelliten gemäß Anspruch 1, **gekennzeichnet** durch folgende Verfahrensschritte:
   a) Sonnensuche mit dem Ziel, die Sonne, deren Position im satellitenfesten Koordinatenssystem durch den Sonnenvektor $\underline{S} = (S_X, S_Y, S_Z)^T$ gegeben ist, in das Gesichtsfeld der Sonnensensoranordnung zu bringen,
   b) Einregeln der durch die Richtung des Sonnenvektors $\underline{S}$ gegebenen Sonnenlinie auf eine erste Referenzrichtung $\underline{S}_{R1}$,
   c) Einregeln der Satelliten-Drehgeschwindigkeit $\omega_p$ um die Sonnenlinie auf einen wählbaren konstanten Wert unter möglichst vollständiger Unterdrückung der Querkomponente $\underline{\omega}_q$,
   d) Einregeln der Sonnenlinie auf eine zweite Referenzrichtung, die in Abhängigkeit von der jeweiligen bekannten Bahnposition des Satelliten und der Richtung der optischen Achse des Erdsensors so gewählt ist, daß bei Drehung des Satelliten um die zweite Referenzrichtung $\underline{S}_{R2}$ die optische Achse des Erdsensors die Erde überstreicht,
   e) Ausrichtung des Satelliten mit der optischen Achse des Erdsensors auf die Erde.

3. Verfahren nach Anspruch 2, **dadurch gekennzeichnet**, daß, falls bei der Sonnensuche die Sonne nach einer vorwählbaren Zeit nicht in das Gesichtsfeld der Sonnensensoranordnung eingetreten ist, zur Anregung einer Nutationsbewegung Momentenpulse um eine in der Gesichtsfeldebene liegende Achse ausgeübt werden.

4. Verfahren nach Anspruch 2 oder 3, **dadurch gekennzeichnet**, daß beim Einregeln der Sonnenlinie auf die erste Referenzrichtung $\underline{S}_{R1}$ folgendes Regelgesetz im Regler zur Anwendung kommt:

$$\underline{u} = -\underline{K}_D\underline{L}_D\underline{\omega}_q + \underline{K}_p\underline{L}_p(\tilde{\underline{S}}_{R1}\cdot\underline{S}) \qquad\qquad \underline{\omega}_q = -\tilde{\underline{S}}\cdot\hat{\underline{S}}$$

wobei $\underline{u}$ die den Stellgliedern zuzuführende vektorielle Stellgröße, $\underline{K}_D$ und $\underline{K}_P$ die Diagonalmatrizen der Lage- bzw. Geschwindigkeitsverstärkungsfaktoren, $\underline{L}_D$ und $\underline{L}_P$ vektorielle Begrenzer, $\underline{\omega}_q$ die Querkomponente der Satelliten-Drehgeschwindigkeit $\underline{\omega}$ bezügl. der Sonnenlinie, $\tilde{\underline{S}}_{R1}$ und $\tilde{\underline{S}}$ schiefsymmetrische Vektorprodukt-Matrizen und $\hat{\underline{S}}$ der Schätzwert für die zeitliche Ableitung des Sonnenvektors $\underline{S}$ sind.

5. Verfahren nach einem der Ansprüche 2 bis 4, **dadurch gekennzeichnet**, daß beim Einregeln der Satelliten-Drehgeschwindigkeit $\omega_p$ um die Sonnenlinie auf einen konstanten Wert folgendes Regelgesetz im Regler zur Anwendung kommt:

$$\underline{u} = -\underline{K}_D\underline{L}_D\underline{\omega}_q + \underline{K}_p\underline{L}_p(\tilde{\underline{S}}_{R1}\cdot\underline{S}) + k_S\,\text{sign}(c)\underline{S}(|c_R|-|c|)$$

wobei $k_s$ ein skalarer Verstärkungsfaktor, $c = |\omega_p|$ die Drehgeschwindigkeit um die Sonnenlinie und $c_R$ der entsprechende Referenzwert sind.

6. Verfahren nach Anspruch 5, **dadurch gekennzeichnet**, daß bei Vorliegen quasi-stationärer Verhältnisse mit $\underline{S} \approx \underline{S}_{R1}$ und $\hat{\underline{S}} \approx 0$ der Betrag der Drehgeschwindigkeit c nach der folgenden Vorschrift ermittelt wird:

$$c^2 = \frac{(\tilde{\underline{S}} \cdot I\underline{S})^T \underline{\tau}}{|\tilde{\underline{S}} \cdot I\underline{S}|^2}$$

wobei I der Trägheitstensor des Satelliten bezüglich seines satellitenfesten Koordinatensystems und $\underline{\tau}$ das zum Einregeln der Sonnenlinie gerade aufgebrachte Regelmoment ist.

7. Verfahren nach Anspruch 6, **dadurch gekennzeichnet**, daß das Regelmoment $\underline{\tau}$ nach der Vorschrift bestimmt wird:

$$\underline{\tau} = T_c \underline{a}$$

wobei $T_c$ die Drehmomentmatrix des jeweils verwendeten Satzes von Stellgliedern und $\underline{a}$ der die Aussteuerungsgrade der Stellglieder repräsentierender Vektor ist.

8. Verfahren nach Anspruch 6 oder 7, **dadurch gekennzeichnet**, daß das Vorzeichen der Drehgeschwindigkeit c bestimmt wird aus dem Vorzeichen der nach Ablauf eines Zeitintervalles infolge des einwirkenden Regelmomentes $\underline{\tau}$ eingetretenen Betragsänderung der Drehgeschwindigkeit unter Berücksichtigung der Richtung des Regelmomentes zu Beginn des Zeitintervalls.

9. Verfahren nach Anspruch 5, **dadurch gekennzeichnet**, daß bei Vorliegen einer z.B. durch ein Drallrad erzeugten Drehimpulskomponente $\underline{h}$ quer zur Sonnenlinie der Betrag der Drehgeschwindigkeit c gemäß der Vorschrift

$$c = \frac{(\tilde{\underline{S}} \cdot \underline{h}) \underline{\tau}}{|\tilde{\underline{S}} \cdot \underline{h}|^2}$$

ermittelt wird.

## Claims

1. Three-axes-stabilized earth-oriented satellite with an attitude-control system comprising a regulator, control elements for generating regulatory moments around each of the three axes of the satellite based coordinate system, a two-axes measuring earth sensor and a two-axes measuring sun-sensor arrangement, **characterized in that** that the field of view of the sun-sensor arrangement in a plane of the coordinate system covers an angular range between 0° and 360°, and that the attitude-control system as a measuring-data controller comprises exclusively the sun-sensor arrangement and the earth sensor.

2. Process for carrying out the sun- and earth-acquisition with a satellite according to claim 1, **characterized by** the following procedural stages:
   a) sun search with the aim to bring the sun, the position of which is given in the satellite-based coordinate system by the sun vector $\underline{S} = (S_X, S_Y, S_Z)^T$, into the field of view of the sun-sensor arrangement;
   b) alignZng the sun line, which is given by the direction of the sun vector $\underline{S}$, with a first reference direction $\underline{S}_{R1}$;
   c) aligning the rotational speed of the satellite $\underline{\omega}_p$ around the sun line with a selectable constant value with maximum suppression of the transverse component $\underline{\omega}_q$;

d) aligning the sun line with a second reference direction which is chosen, in dependence of a respective known path position of the satellite and of the direction of the optical axis of the earth sensor, so that the optical axis of the earth sensor sweeps over the earth when the satellite is rotated around the second reference direction $\underline{S}_{R2}$;

e) aligning the satellite with the optical axis of the earth sensor towards the earth.

3. Process according to claim 2, **characterized in that**, in the event that during a sun search the sun does not enter the field of view of the sun-sensor arrangement within a preselectable time, moment pulses around an axis in the field-of-view plane are generated to initiate a nutational movement.

4. Process according to claim 2 or 3, **characterized in that** the following regulating rule applies in the regulator when aligning the sun line with the first reference direction $\underline{S}_{R1}$:

$$\underline{u} = -\underline{K}_D \, \underline{L}_D \, \underline{\omega}_q + \underline{K}_P \, \underline{L}_P \, (\tilde{\underline{S}}_{R1} \times \underline{S}) \qquad \underline{\omega}_q = -\tilde{\underline{S}} \times \hat{\underline{S}}$$

where $\underline{u}$ is the vectorial control output to be delivered to the control elements, $\underline{K}_D$ and $\underline{K}_p$ are the diagonal matrixes of the attitude- or speed-amplification factors, $\underline{L}_D$ and $\underline{L}_p$ are vectorial limiters, $\omega_q$ is the transverse component of the rotational speed of the satellite $\omega$ relative to the sun line, $\tilde{\underline{S}}_{R1}$ and $\tilde{\underline{S}}$ are skew-symmetrical vector-product matrixes, and $\hat{\underline{S}}$ is the estimated value for temporal derivative of the sun vector $\underline{S}$.

5. Process according to one of claims 2 to 4, **characterized in that** the following regulating rule applies in the regulator when aligning the satellite rotational speed $\omega_p$ around the sun line to a constant value:

$$\underline{u} = \underline{K}_D \, \underline{L}_D \, \underline{\omega}_q + \underline{K}_P \, \underline{L}_P \, (\tilde{\underline{S}}_{R1} \times \underline{S}) + k_s \, \mathrm{sign}(c) \underline{S}(|c_R| - |c|)$$

where $k_s$ is a scalar amplification factor, $c = |\omega_p|$ is the rotational speed around the sun line, and $c_R$ is the respective reference value.

6. Process according to claim 5, **characterized in that** in the presence of quasi-stationary conditions with $\underline{S} \approx \underline{S}_{R1}$ and $\hat{\underline{S}} \approx 0$ the amount of rotational speed c is determined by means of the following equation:

$$c^2 = \frac{(\tilde{\underline{S}} \times I \underline{S})^T \underline{\tau}}{|\tilde{\underline{S}} \times I \underline{S}|^2}$$

where I is the inertia tensor of the satellite relative to its satellite based coordinate system, and $\underline{\tau}$ is the just applied regulating moment for aligning the sun line.

7. Process according to claim 6, **characterized in that** the regulating moment $\underline{\tau}$ is determined by way of the following equation:

$$\underline{\tau} - T_c \underline{a}$$

where $T_c$ is the rotational moment matrix of a respective applied set of control elements, and $\underline{a}$ is the vector which represents the control straight of the control elements.

8. Process according to claim 6 or 7, **characterized in that** the sign of the rotational speed c is determined by means of the sign of the change in rotational speed which occurs on expiration of a time interval due to the effective regulating moment $\underline{\tau}$ whilst taking into consideration the direction of the regulating moment at the start of the time interval.

9. Process according to claim 5, **characterized in that** in the presence of a rotational pulse component $\underline{h}$, for example generated by a twist wheel, across the sun line, the amount of rotational speed c is determined according to the following equation:

$$c = \frac{(\tilde{\underline{S}} \times \underline{h})\underline{\tau}}{|\tilde{\underline{S}} \times \underline{h}|^2}$$

**Revendications**

1. Satellite orienté vers la terre stabilisé suivant trois axes, comportant un système de régulation de l'attitude qui comprend un dispositif de réglage, des actionneurs pour générer des moments de réglage autour de chacun des trois axes du système de coordonnées lié au satellite, un détecteur de repérage de la position de la terre qui effectue la mesure suivant deux axes et un ensemble de détecteurs de repérage de la position du soleil qui effectue la mesure suivant deux axes, caractérisé par le fait que le champ de vision de l'ensemble de détecteurs de repérage de la position du soleil couvre une plage angulaire de 0° à 360° dans un plan du système de coordonnées et que le système de régulation de l'attitude comprend exclusivement l'ensemble de détecteurs de repérage de la position du soleil et le détecteur de repérage de la position de la terre comme détecteurs de mesure.

2. Procédé pour l'acquisition du soleil et l'acquisition de la terre à bord d'un satellite conforme à la revendication 1, caractérisé par les étapes suivantes:
   a) recherche du soleil avec pour but d'amener dans le champ de vision de l'ensemble de détecteurs de repérage de la position du soleil le soleil dont la position dans le système de coordonnées lié au satellite est donnée par le vecteur solaire $\underline{S} = (S_X, S_Y, S_Z)^T$,
   b) réglage dans une première direction de référence $\underline{S}_{R1}$ de l'axe du soleil qui est donné par le vecteur solaire $\underline{S}$,
   c) réglage de la vitesse angulaire $\omega_p$ du satellite autour de l'axe du soleil à une valeur constante sélectionnée en éliminant le plus possible la composante transversale $\omega_q$,
   d) réglage de l'axe du soleil dans une deuxième direction de référence choisie en fonction de la position en orbite connue du satellite et de la direction de l'axe optique du détecteur de repérage de la position de la terre de manière telle que, lors de la rotation du satellite autour de la deuxième direction de référence $\underline{S}_{R2}$, l'axe optique du détecteur de repérage de la position de la terre balaye la terre,
   e) orientation du satellite avec l'axe optique du détecteur de repérage de la position de la terre pointant vers la terre.

3. Procédé selon la revendication 2, caractérisé par le fait que lorsque, lors de la recherche du soleil, celui-ci n'est pas entré dans champ de vision de l'ensemble de détecteurs de repérage de la position du soleil après un temps prédéterminé, on exerce des moments pulsatoires autour d'un axe situé dans le plan du champ de vision aux fins d'exciter un mouvement de nutation.

4. Procédé selon la revendication 2 ou la revendication 3, caractérisé par le fait que lors du réglage de l'axe de soleil dans la première direction de référence $\underline{S}_{R1}$ on applique la loi de régulation suivante dans le dispositif de régulation:

$$\underline{u} = -\underline{K}_D\underline{L}_D\underline{\omega}_q + \underline{K}_P\underline{L}_P\,(\tilde{\underline{S}}_{R1} * \underline{S})$$
$$\underline{\omega}_q = -\tilde{\underline{S}} * \hat{\underline{S}}$$

avec $\underline{u}$ la grandeur de réglage vectorielle à transmettre aux actionneurs, $\underline{K}_D$ et $\underline{K}_P$ les matrices diagonales des facteurs d'amplification de la vitesse et de l'attitude, $\underline{L}_D$ et $\underline{L}_P$ des limiteurs vectoriels, $\underline{\omega}_q$ la composante transversale de la vitesse angulaire $\underline{\omega}$ du satellite par rapport à l'axe du soleil, $\tilde{\underline{S}}_{R1}$ et $\tilde{\underline{S}}$ des matrices antisymétriques de produit vectoriel et $\hat{\underline{S}}$ la valeur estimative pour la dérivation du vecteur solaire $\underline{S}$ par rapport au temps.

5. Procédé selon l'une des revendications 2 à 4, caractérisé par le fait que lors de la régulation autour d'une valeur constante de la vitesse angulaire $\underline{\omega}_p$ du satellite autour de l'axe du soleil on applique la loi de régulation suivant dans le dispositif de réglage:

$$\underline{u} = -\underline{K}_D\underline{L}_D\underline{\omega}_q + \underline{K}_p\underline{L}_p(\bar{\underline{S}}_{R1} * \underline{S}) + k_S \text{sign}(c)\underline{S}(|c_R| - |c|)$$

$k_s$ représentant un facteur scalaire d'amplification, $c = |\omega_p|$ la vitesse angulaire autour de l'axe du soleil et $c_R$ la valeur de référence correspondante.

6. Procédé selon la revendication 5, caractérisé par le fait qu'en présence de conditions quasi-stationnaires avec $\underline{S} \approx \underline{S}_{R1}$ et $\hat{\underline{S}} \approx 0$, on détermine la vitesse angulaire c d'après la formule suivante:

$$c^2 = \frac{(\underline{S} * I\underline{S})^T \tau}{\overline{\underline{S} * I\underline{S}}^2}$$

avec I le détecteur d'inertie du satellite par rapport au système de coordonnées lié audit satellite et $\tau$ le moment de réglage appliqué pour le réglage l'axe du soleil.

7. Procédé selon la revendication 6, caractérisé par le fait que l'on détermine le moment de réglage $\tau$ d'après la formule:

$$\underline{\tau} = T_c\underline{a}$$

avec $T_c$ la matrice du couple du jeu d'actionneurs utilisés et $\underline{a}$ le vecteur qui représente les degrés de commande des actionneurs.

8. Procédé selon la revendication 6 ou la revendication 7, caractérisé par le fait que l'on détermine le signe de la vitesse angulaire c à partir du signe de la variation de la valeur de la vitesse angulaire intervenue au bout d'un intervalle de temps du fait du moment de réglage appliqué, en tenant compte de la direction du couple de réglage au début de l'intervalle de temps.

9. Procédé selon la revendication 5, caractérisé par la fait qu'en présence d'une composante $\underline{h}$ d'impulsion de rotation produite par exemple par un volant d'inertie, transversalement à l'axe du soleil, on détermine la valeur de la vitesse angulaire c suivant la formule

$$c = \frac{(\bar{\underline{S}} * \underline{h})^T \underline{\tau}}{\overline{\underline{S} * \underline{h}}^2}$$